# EUROPÄISCHE PATENTSCHRIFT

(11) **EP 0 704 684 B1**
(45) Veröffentlichungstag und Bekanntmachung des Hinweises auf die Patenterteilung: **01.03.2000**
(21) Anmeldenummer: 95250234.2
(22) Anmeldetag: 25.09.1995
(51) Int. Cl.: G01G 19/08, G01G 19/12, A01F 15/08

(54) **Wägeeinrichtung für Ballenpressen**
Baler weighing device
Dispositif de pesage pour presses à balles

(30) Priorität: 27.09.1994 DE 4436128
(43) Veröffentlichungstag der Anmeldung: 03.04.1996
(73) Patentinhaber: CLAAS Kommanditgesellschaft auf Aktien, 33428 Harsewinkel (DE)
(72) Erfinder: Hawlas, Martin, D-33428 Harsewinkel (DE); Esken, Dirk, D-59494 Soest (DE)
(74) Vertreter: Radwer, Dieter

(56) Entgegenhaltungen:
- EP-A- 0 222 230
- DE-U- 9 214 818
- US-A- 3 724 684
- US-A- 4 742 880
- US-A- 5 384 436

## Beschreibung

Die Erfindung betrifft eine Wägeeinrichtung für Ballenpressen zur Erfassung und Registrierung der Gewichtskraft von gepreßten Ballen aus Heu, Stroh oder angewelktem Grünfutter im Prozeß ihrer Herstellung, vorzugsweise für Großballenpressen.

Das Stroh von geernteten Halmfrüchten ist nicht nur als Düngergrundlage für landwirtschaftliche und gärtnerisch genutzte Flächen oder als Einstreu in der Tierhaltung von Bedeutung, sondern wird verstärkt auch einer weiteren industriellen Verwertung zur Herstellung anderweitiger Produkte, wie beispielsweise Dämmplatten, Füllstoffe, Verpackungsmaterial etc., zugeführt.

In zunehmendem Maße wird auch Heu und angewelktes Grünfutter für die Bevorratung und für die Silage zu Großballen verpreßt, die eine effektivere Bewirtschaftung in der Tierhaltung gestatten. Durch die Herstellung von quaderförmigen Großballen mit Hilfe von Großballenpressen können außerdem die vorhandenen Transportkapazitäten und die Lagerräume in den landwirtschaftlichen Betrieben rationeller und kostengünstiger genutzt werden.

Für den Produzenten, den Endverbraucher und den Finalproduzenten ist demzufolge nicht nur die tägliche Arbeitsleistung der im Einsatz befindlichen Ballenpressen von Interesse, sondern auch die genaue Kenntnis beispielsweise über die Gesamtgewichtskraft der verpreßten Ballen, die Gewichtskraft pro Stück und die Stückzahl, da die gepreßten Ballen oftmals direkt vom Feld oder von der Wiese an die jeweiligen Abnehmer oder Verbraucher geliefert werden.

Bekannte Ballenpressen zur Herstellung von quaderförmigen Großballen sind mit einer Laderutsche ausgestattet, um die gepreßten Großballen allmählich abwärts gleitend auf dem abgeernteten Schlag abzusetzen.

Die Laderutsche ist in axialer Verlängerung des Preßund Förderkanals an der Heckseite der Ballenpresse abklappbar angebracht und vorteilhafterweise in verschwenkbare Sektionen unterteilt. Bei Bedarf kann die Laderutsche auf einfache Weise ein- und hochgeklappt und so das Manövrieren mit der Ballenpresse erleichtert und effektiver gestaltet werden.

Bekannt sind ebenfalls Ballenstapler, um die quaderförmig gepreßten Großballen gestapelt bzw. geschobert auf dem abgeernteten Schlag abzusetzen. Die abgesetzten und geschoberten Ballen werden mit entsprechenden Arbeitsgeräten aufgenommen und unter nahezu vollständiger Nutzung des verfügbaren Transportraumes auf Transportfahrzeuge verladen und ihrer bestimmungsgemäßen Nutzung zugeführt. Der Ballenstapler ist gelenkig an der Ballenpresse angeordnet und wird durch hydraulische Zylinder-Kolbeneinheiten zum Schobern oder Stapeln der quaderförmigen Großballen in unterschiedliche Höhen verstellt.

Sowohl der Ballenstapler als auch die Laderutsche können mit Mitteln zur Erfassung der jeweiligen Gewichtskraft der gepreßten Großballen ausgestattet sein, wobei die Gewichtskraft im Prozeß des Auswurfes der Ballen aus der Presse erfaßt und registriert wird, wie z.B. beschrieben in US-A-4 742 880.

Die bekannten Lösungen sind insofern unbefriedigend, da sie die Gewichtskraft der Großballen nicht genau erfassen. Dadurch entstehen erhebliche Abweichungen von den tatsächlichen Werten, die letztlich zu Unstimmigkeiten und Fehleinschätzungen bei der Leistungsbewertung führen. Im Hinblick auf die hohe Arbeitsleistung einer Großballenpresse und die relativ große Gewichtskraft eines gepreßten Großballens können diese Abweichungen zu erheblichen einnahmeseitigen Verlusten führen.

Die Abweichungen bei der Erfassung und Registrierung der Gewichtskraft der Großballen gegenüber den tatsächlichen Ist-Werten werden vor allem dadurch verursacht, daß die Gewichtskraft in keiner exakt festgelegten Wägeposition, sondern während des Durchlaufes der gepreßten Ballen innerhalb der Wegstrecke zwischen dem Verlassen des Preßkanals und der endgültigen Ablage der Ballen auf dem abgeernteten Schlag erfaßt wird. Außerdem muß gesichert sein, daß die Gewichtskraft in Schwerkraftrichtung gemessen wird, was bei den in bekannter Weise an die Großballenpresse angelenkten Laderutschen bisher nicht gewährleistet ist.

Der Erfindung liegt die Aufgabe zugrunde, eine Wägeeinrichtung für Ballenpressen zu entwickeln, bei der die Gewichtskraft der gepreßten Ballen in einer genau definierten Wägeposition erfaßt und registriert wird.

Erfindungsgemäß wird die Aufgabe durch die im Anspruch 1 angegebenen Merkmale gelöst. Weitere vorteilhafte Ausbildungen der Erfindung ergeben sich aus den Merkmalen der Unteransprüche 2 bis 9.

Die Erfindung schlägt eine relativ einfach aufgebaute und kostengünstige Lösung vor, die ohne großen Aufwand an vorhandenen Großballenpressen nachgerüstet werden kann. Mit der erfindungsgemäßen Wägeeinrichtung wird die Gewichtskraft des gepreßten Ballens auf wiederholbare Weise in genau bestimmter Position erfaßt und registriert, wobei der aus dem Preß- und Förderkanal der Ballenpresse herauskommende Ballen in seiner Ausgangsbewegung durch eine selbsttätige Sperreinrichtung auf der Laderutsche gestoppt und bei Stillstand des Ballens über einen Signalgeber ein Befehl an eine Steuer- und Recheneinheit zur Erfassung der Gewichtskraft des auf der Laderutsche vorzugsweise vollflächig aufliegenden Ballens ausgelöst wird. Die Gewichtskraft des gepreßten Ballens wird vorteilhafterweise von einem Meßwertgeber erfaßt, der über einen Drucksensor mit einem Steuerund Rechengerät oder einem Bordcomputer zur Registrierung und Auswertung der ermittelten Werte verbunden ist.

Durch den nachfolgenden, aus dem Preß- und Förderkanal kommenden Ballen wird die Sperre, die den vorangegangenen Ballen in Wägeposition hält, aufgehoben und dieser Ballen von der Laderutsche ablaufend auf die abgeerntete Fläche abgesetzt, während der nachfolgende Ballen in die Laderutsche einläuft und wiederum zur Erfassung und Registrierung seiner Gewichtskraft in eine gesperrte Wägeposition gebracht wird. In dieser Position liegt der gepreßte Ballen wiederum vorteilhafter Weise vollflächig auf der Laderutsche auf. Die Erfassung und Registrierung der Gewichtskraft erfolgt somit in einer genau bestimmten und fixierten Position bei Bewegungsstillstand der kontinuierlich aus der Presse herauslaufenden Ballen.

Die als Wägeeinrichtung ausgebildete Laderutsche verfügt vorzugsweise über einen geschlossenen Tragrahmen, der mittels Längslenker so an das Pressengehäuse der Großballenpresse angebracht ist, daß sie bei Beaufschlagung durch die Gewichtskraft des aufliegenden gepreßten Ballens parallelogrammartig ausgelenkt und die Gewichtskraft durch den mit dem Halterahmen zusammenwirkenden Meßwertgeber stets in Schwerkraftrichtung, in der vorliegenden Ausführung der Erfindung parallel zur Gewichtskraft des auf der Laderutsche befindlichen Ballens, gemessen wird.

Neben ihrer exakten Justierung gestattet die Ausbildung und Anordnung der als Wägeeinrichtung dienenden Laderutsche eine genaue und schnelle Erfassung und Registrierung der beispielsweise aus einer Großballenpresse herauslaufenden quaderförmig gepreßten Ballen. Eventuell auftretende Abweichungen in den ermittelten Werten werden durch die vorgeschlagene Lösung auf ein vertretbares Minimum reduziert.

Die Erfindung soll nachstehend an einem Ausführungsbeispiel näher erläutert werden. In den dazugehörigen Zeichnungen zeigen:
- Fig. 1: eine Großballenpresse mit angeschlossener Laderutsche/Wägeeinrichtung
- Fig. 2: eine detaillierte Darstellung der als Wägeeinrichtung ausgebildeten Laderutsche

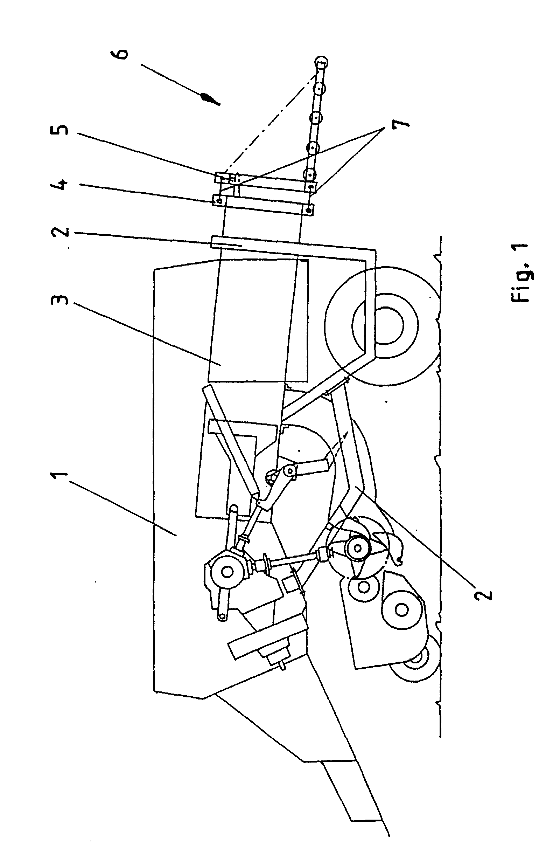

Die in Fig. 1 schematisch dargestellte Großballenpresse 1 verfügt über einen zentralen Maschinenrahmen 2, an den der mit einem Rahmen 4 abschließende Preß- und Förderkanal 3 der Ballenpresse angeschlossen ist. Über obere und untere Längslenker 7 ist an den Abschlußrahmen 4 eine Laderutsche 6 aus ihrer horizontalen Ebene auslenkbar angebracht, die entsprechend dem Gegenstand der Erfindung gleichzeitig als Wägeeinrichtung dient.

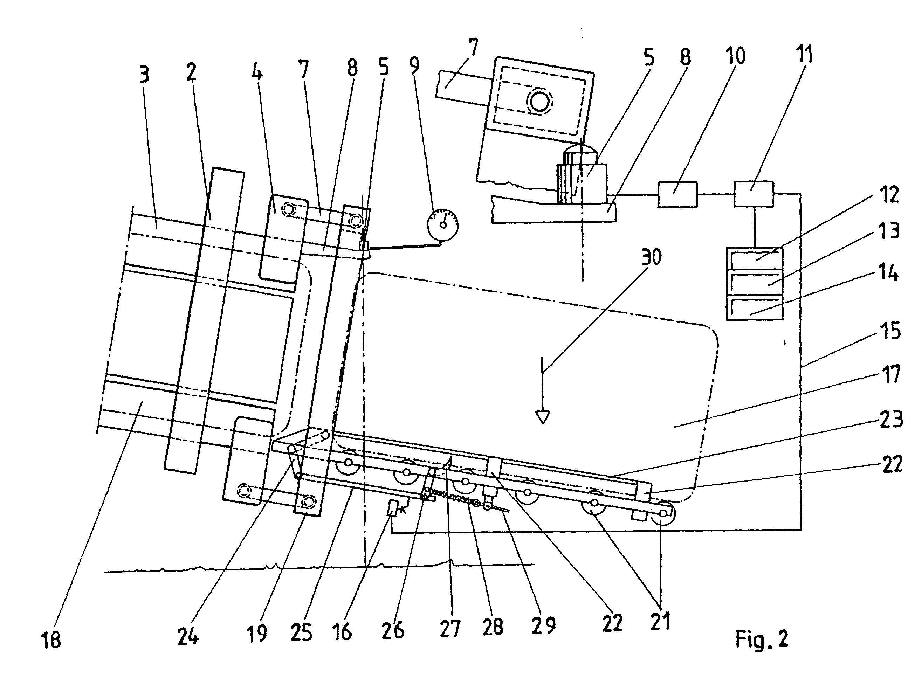

Wie aus Fig. 2 näher ersichtlich, besteht die als Wägeeinrichtung ausgebildete Laderutsche 6 aus dem Tragrahmen 10, an den der Rahmen 20 in einem Winkel von 90° starr befestig ist. Die Laderutsche 6 ist vermittels der oberen und unteren Längslenker 7 so an den Preß- und Förderkanal 3 der Großballenpresse angebracht, daß sie bei Beaufschlagung durch die Gewichtskraft eines auf der Laderutsche 6 befindlichen Ballens 17 parallelogrammartig aus einer horizontalen Ebene ausgelenkt wird. Diese Anordnung gewährleistet, daß die zu ermittelnde Gewichtskraft des Ballens 17, der in einer genau definierten Wägeposition, vorzugsweise vollflächig, auf den Tragrollen 21 der Laderutsche 6 aufliegt, parallel zur Richtung der Schwerkraft 30 gemessen wird.

Die Gewichtskraft kann, wie im vorliegenden Beispiel ausgeführt, durch ein hydraulisches Meßverfahren oder wahlweise durch ein elektronisches Meßverfahren unter Verwendung von Meßfühlern in Form von Dehnungs- oder Druckmeßstreifen erfaßt werden.

Der mit dem Tragrahmen 19 der Laderutsche 6 zusammenwirkende Meßwertgeber 5 ist mittels Halterung 8 an der Großballenpresse 1 fest angebracht und über einen Sensor 10 mit einer Steuer- und Recheneinheit 11 verbunden. Die Steuer- und Recheneinheit 11 ist ferner mit einer Anzeigeeinheit verbunden, die wahlweise aus einer Anzeige 12 für die Gesamtgewichtskraft, einer Anzeige 13 für die Gewichtskraft der einzelnen Ballen und einer Anzeige 14 für die in der Tagesleistung gepreßte Ballenstückzahl besteht. Über die Signalleitung 15 ist außerdem ein Signalgeber 16 an die Steuer- und Recheneinheit 11 angeschlossen, der mit der Zugstange 25 einer Sperreinrichtung wirkverbunden ist und die genaue Positionierung des auf der Laderutsche 6 befindlichen Ballens 17 signalisiert, wodurch in der Steuer- und Recheneinrichtung 11 ein Befehl zur Erfassung und Registrierung der Gewichtskraft des zu wiegenden Ballens 17 auslöst wird.

Die Sperreinrichtung, die der genauen Fixierung der Wägeposition eines auf der Laderutsche 6 befindlichen Ballens 17 dient, besteht aus mindestens einer verschwenkbar im Rahmen 20 gelagerten Sperrklinke 27, die über einen Schwenkhebel 26 und eine Zugstange 25 mit einem eingangsseitig im Rahmen 20 gelagerten Winkelhebel 24 verbunden ist. Die Sperrklinke 27 wird durch eine vorgespannte Zugfeder 28, deren Federvorspannung mit Hilfe einer am Rahmen 20 angelenkten Zugfedereinstellung 29 eingestellt werden kann, ständig in Sperrstellung gehalten. Diese Sperrstellung wird selbsttätig vermittels des eingangsseitig an der Laderutsche 6 angebrachten Winkelhebels 24 aufgehoben, der beim Einlaufen eines nachfolgenden, aus dem Preß- und Förderkanal 3 kommenden Ballens 18 verschwenkt und zusammen mit der Sperrklinke 27 in seine Ausgangsstellung zurückgeführt wird, sobald der nachgerückte Ballen 18 auf den Tragrollen 19 der Laderutsche 6 aufliegt. In diesem Moment wird, wie bereits dargelegt, über den Signalgeber 16 ein Steuerbefehl ausgelöst, der den Stillstand und die genaue Positionierung eines Ballens 17;18 auf der Laderutsche 6 signalisiert und einen Befehl zum Erfassen und Registrieren der Gewichtskraft der Ballen 17 auslöst.

Die Erfassung und Registrierung der Gewichtskraft der Ballen erfolgt somit in einer reproduzierbaren lagebestimmten Wägeposition und in Ruhestellung, wobei die Ballen in ihrer Ablaufbewegung kurzzeitig gestoppt und mit Einlauf des nächstfolgenden, aus dem Preßund Förderkanal 3 der Großballenpresse 1 kommenden Ballens in die Laderutsche 6 zur Ablage auf der abgeernteten Fläche freigegeben werden.

Die Laderutsche 6 ist vorteilhafterweise mit Tragrollen 21 ausgestattet, damit die Haftreibung zwischen Ballen und Laderutsche möglichst klein und ein störungsfreier Prozeßablauf gewährleistet ist.

Der Sicherung der genauen Wägeposition der Ballen 17;18 dienen ferner Seitenführungen 23, die durch Stegbleche 23 am Rahmen 20 befestigt sind und mit den Längsflächen der quaderförmig gepreßten Ballen 17;18 korrespondieren.

Vorteilhafterweise ist an den Geber 5 zusätzlich ein Meßgerät 9 angebracht, wodurch beispielsweise eine direkte Kontrolle der Funktion und der Arbeitsweise der Wägeeinrichtung ermöglicht wird.

### Bezugszeichenaufstellung

- 1: Großballenpresse
- 2: Maschinenrahmen
- 3: Preß-/Förderkanal
- 4: Anschlußrahmen
- 5: Meßwertgeber
- 6: Laderutsche/Wägeeinrichtung
- 7: Längslenker
- 8: Halterung
- 9: Meßgerät
- 10: Drucksensor
- 11: Steuer- und Recheneinrichtung
- 12: Anzeige für die Gesamtgewichtskraft
- 13: Anzeige für die Stückgewichtskraft
- 14: Anzeige der Stückzahl
- 15: Signalleitung
- 16: Signalgeber
- 17: Ballen
- 18: Ballen
- 19: Tragrahmen
- 20: Rahmen
- 21: Tragrollen
- 22: Stegblech
- 23: Seitenführung
- 24: Winkelhebel
- 25: Zugstange
- 26: Schwenkhebel
- 27: Sperrklinke
- 28: Zugfeder
- 29: Zugfedereinstellung
- 30: Schwerkraft

## Patentansprüche

1. Wägeeinrichtung für Ballenpressen (1) zur Erfassung und Registrierung der Gewichtskraft von gepreßten Ballen (17) aus Heu, Stroh oder angewelktem Grünfutter, vorzugsweise für Großballenpressen, in Form einer in axialer Verlängerung zum Preßund Förderkanal (3) gelenkig an der Ballenpresse (1) angebrachten Laderutsche (6), bestehend aus einem Tragrahmen und einer mit dem Tragrahmen fest verbundenen Rutsche, wobei der Tragrahmen mit einem an der Ballenpresse gehalterten Druckgeber zur Messung der Gewichtskraft zusammenwirkt, **dadurch gekennzeichnet**, daß die als Wägeeinrichtung ausgebildete Laderutsche (6) mittels Längslenker (7) parallelogrammartig auslenkbar an der Ballenpresse (1) angebracht und mit Mitteln (24 bis 29) ausgestattet ist, die den Ballen (17) in einer Wägeposition fixieren und über einen Signalgeber (16) einen Befehl zur Erfassung und Registrierung der Gewichtskraft des Ballens (17) in einer Steuerund Recheneinrichtung (11) auslösen, die mit einem Meßwertgeber für die Gewichtskraft und mit einer Anzeigeeinheit (12, 13, 14) verbunden ist.

2. Wägeeinrichtung nach Anspruch 1, **dadurch gekennzeichnet**, daß im Rahmen (20) der Laderutsche (6) mindestens eine Sperrklinke (27) verschwenkbar angeordnet und über eine Zugstange (25) und einen Schwenkhebel (26), der einstellbar an der Zugstange (25) angelenkt ist, mit einem eingangsseitig angeordneten, drehbar gelagerten Winkelhebel (24) verbunden ist.

3. Wägeeinrichtung nach Anspruch 1 oder 2, **dadurch gekennzeichnet**, daß die Sperrklinke (27) durch eine vorgespannte Zugfeder (27) in Sperrstellung gehalten wird, die bei Betätigung des Winkelhebels (24) aufhebbar ist.

4. Wägeeinrichtung nach einem der Ansprüche 1 bis 3, **dadurch gekennzeichnet**, daß das freie Ende der Zugfeder (28) an eine am Rahmen (20) der Laderutsche (6) angebrachte Stelleinrichtung (29) justierbar angelenkt ist.

5. Wägeeinrichtung nach Anspruch 1 oder 2, **dadurch gekennzeichnet**, daß die Zugstange (25) mit dem über eine Signalleitung (15) an die Steuer- und Recheneinheit (10) angeschlossenen Signalgeber (16) wirkverbunden ist.

6. Wägeeinrichtung nach Anspruch 1 oder 2, **dadurch gekennzeichnet**, daß der Rahmen (20) der Laderutsche (6) mit Tragrollen (21) ausgestattet ist und zu den Längsseiten des Ballens (17) korrespondierende Seitenführungen (23) aufweist, die durch Stegbleche (22) fest am Rahmen angebracht sind.

7. Wägeeinrichtung nach Anspruch 1 oder 2, **dadurch gekennzeichnet**, daß die Anzeigeeinheit wahlweise aus einer Anzeige (12) für die Gesamtgewichtskraft, einer Anzeige (13) für die Stückgewichtskraft und einer Anzeige (14) für die Ballenstückzahl besteht und an den Druckgeber (5) zusätzlich ein Meßgerät (9) angeschlossen ist.

8. Wägeeinrichtung nach Anspruch 1 oder 2, **dadurch gekennzeichnet**, daß die Erfassung und Registrierung der Gewichtskraft der Ballen (17, 18) auf elektronischem Wege unter Verwendung von Druck- und/oder Dehnungsmeßstreifen erfolgt, die an den Längslenkern (7) und/oder auf der Halterung (8) angebracht sind.

9. Wägeeinrichtung nach Anspruch 1 oder 2, **dadurch gekennzeichnet**, daß der Ballen (17) in der fixierte Wägeposition vorzugsweise vollflächig auf der Laderutsche (6) aufliegt.

## Claims

1. Weighing device for bale presses (1) for recording and registering the weight of pressed bales (17) of hay, straw or dried green feed, preferably for large bale presses in the form of an axial extension to the press and conveyor channel (3) jointed at the bale press (1) attached to the slide (6) consisting of a frame and a slide attached with frame, whereby the frame works together with a pressure device for measuring the weight, characterized by the as weighing device re-engineered slide (6) being attached to the bale press (1) by means of the longitudinal swinging arm (7) in a parallelogram fashion, which sets the bales (17) in a horizontal position and via a signal transmitter (16) triggers a command in a control and metering unit (11) to record and register the weight of the bale (17); the control and metering device (11) is connected with a pick-up for the weight and with a display (12, 13, 14).

2. Weighing device in accordance with claim 1, characterized by at least one pivoting catch (27) being located in the frame (29) of the slide (6) and connected via a pull rod (25) and a rocking lever (26), which is adjustably coupled to the pull rod (25) connected with a pivoting angle lever (24) at the front.

3. Weighing device in accordance with claims 1 and 2, characterized by the catch (27) being held in the catch-position by a bolt spring (27), which is released by the action of the angle lever (24).

4. Weighing device in accordance with claims 1 to 3, characterized by the free end of the bolt spring (28) being adjustably coupled to an adjuster (29) on a slide (6) on the frame (20)

5. Weighing device in accordance with claims 1 or 2, characterized by the pull rod (25) being connected with the signal transmitter (16) on the control and metering unit (10) via a signal wire (15).

6. Weighing device in accordance with claims 1 or 2, characterized by the frame (20) of the slide (6) being equipped with rollers (21) and guides (23), corresponding to the lengths of the bales (17), which are attached to the frame with web plates (22).

7. Weighing device in accordance with claims 1 or 2, characterized by the display unit consisting of a display (12) for the total weight, a display (13) for the unit weight and a display (14) for the bale count and the pick-up (5) being attached to a meter (9).

8. Weighing device in accordance with claims 1 or 2, characterized by the recording and registration of the weight of the bales (17, 18) occurring electronically using pressure and/or wire strain gauges which are attached to the longitudinal swing arms (7) and/or to the mounting (8).

9. Weighing device in accordance with claims 1 or 2, characterized by the complete surface of the bales (17) preferably being on the slide (6) in the fixed weighing position.

## Revendications

1. Dispositif de pesage pour des presses à mettre en balles (1) destiné à saisir et à enregistrer le poids de balles pressées (17) composées de foin, de paille ou de fourrage vert commençant à faner, de préférence pour des presses à mettre en grosses balles, en forme de déversoir (6) placé de façon susceptible de s'articuler au niveau de la presse à mettre en balles (1) dans le prolongement axial du canal de pressage et de transport (3), se composant d'un cadre porteur et d'un déversoir relié fixement au cadre porteur, le cadre porteur concourant avec un capteur de pression fixé à la presse à mettre en balles destiné à mesurer le poids, **caractérisé par le fait que** le déversoir (6) configuré en dispositif de pesage est placé au niveau de la presse à mettre en balles au moyen de bras oscillants longitudinaux (7) de façon susceptible de se déplier en forme de parallélogramme et qu'il est équipé de moyens (24 à 29) fixant la balle (17) en position de pesage et déclenchant, par l'intermédiaire d'un transmetteur de signaux (16), une instruction de saisie et d'enregistrement du poids de la balle (17) dans une unité de commande et de saisie (11) reliée à un transmetteur de valeur de mesure du poids et à une unité d'affichage (12,13,14).

2. Dispositif de pesage selon la revendication 1, **caractérisé par le fait qu**'au moins un cliquet d'arrêt (27) est disposé dans le cadre (20) du déversoir (6) de façon susceptible à être pivoté et est relié à un levier coudé (24) logé de façon susceptible de tourner et disposé du côté de l'entrée par l'intermédiaire d'une tige de traction (25) et d'un levier pivotant (26) articulé au niveau de la tige de traction (25) en pouvant être réglé.

3. Dispositif de pesage selon la revendication 1 ou 2, **caractérisé par le fait que** le cliquet d'arrêt (27) est maintenu en position d'arrêt par un ressort de traction prétendu (27) qui est susceptible d'être relâché lorsque le levier coudé (24) est actionné.

4. Dispositif de pesage selon l'une des revendications 1 à 3, **caractérisé par le fait que** l'extrémité libre du ressort de traction (28) est articulée de façon susceptible d'être ajustée à un dispositif de réglage (29) placé au niveau du cadre (20) du déversoir (6).

5. Dispositif de pesage selon la revendication 1 ou 2, **caractérisée par le fait que** la tige de traction (25) est relié de façon efficace au transmetteur de signaux (16) raccordé à l'unité de commande et de calcul (10) par l'intermédiaire d'une conduite de signaux (15).

6. Dispositif de pesage selon la revendication 1 ou 2, **caractérisé par le fait que** le cadre (20) du déversoir (6) est équipé de rouleaux porteurs (21) et qu'il présente des guidages latéraux (23) correspondants aux côtés longitudinaux de la balle (17) placés au niveau du cadre fixement par des entretoises (22).

7. Dispositif de pesage selon la revendication 1 ou 2, **caractérisé par le fait que** l'unité d'affichage se compose au choix d'un dispositif d'affichage (12) du poids total, d'un dispositif d'affichage (13) du poids unitaire et d'un dispositif d'affichage (14) du nombre de balles et qu'en plus un instrument de mesure (9) est raccordé au capteur de pression (5).

8. Dispositif de pesage selon la revendication 1 ou 2, **caractérisé par le fait que** la saisie et l'enregistrement du poids des balles (17,18) sont effectués par voie électronique en utilisant des bandes de mesure de la pression et/ou de l'allongement placées au niveau des bras oscillants longitudinaux (7) et/ou sur la fixation (8).

9. Dispositif de pesage selon la revendication 1 ou 2, **caractérisé par le fait que** la balle (17) repose, en position de pesage déterminée, sur le déversoir (6) de préférence de toute sa surface.
